# EUROPÄISCHE PATENTSCHRIFT

(11) **EP 2 622 726 B1**
(45) Veröffentlichungstag und Bekanntmachung des Hinweises auf die Patenterteilung: **09.03.2016**
(21) Anmeldenummer: 11813663.9
(22) Anmeldetag: 28.09.2011
(51) Int. Cl.: H02N 2/00

(54) **VERFAHREN UND VORRICHTUNG ZUR ELEKTRISCHEN ERREGUNG EINES AKTORS FÜR EINEN ULTRASCHALLMOTOR**
METHOD AND DEVICE FOR ELECTRICALLY EXCITING AN ACTUATOR FOR AN ULTRASONIC MOTOR
PROCÉDÉ ET DISPOSITIF D'EXCITATION ÉLECTRIQUE D'UN ACTIONNEUR POUR MOTEUR ULTRASONIQUE

(30) Priorität: 01.10.2010 DE 102010047280
(43) Veröffentlichungstag der Anmeldung: 07.08.2013
(73) Patentinhaber: Physik Instrumente (PI) GmbH & Co. KG, 76228 Karlsruhe (DE)
(72) Erfinder: WISCHNEWSKIY, Wladimir, 14712 Rathenow (DE); WISCHNEWSKIJ, Alexej, 76744 Wörth (DE)
(74) Vertreter: Schatt, Markus F.
(86) Internationale Anmeldenummer: PCT/DE2011/050037
(87) Internationale Veröffentlichungsnummer: WO 2012/048691

(56) Entgegenhaltungen:
- WO-A1-2007/082601
- WO-A1-2009/109606
- DE-A1-102006 054 597
- DE-A1-102007 016 642
- US-A1- 2003 111 933

## Beschreibung

Die vorliegende Erfindung betrifft ein Verfahren und eine Vorrichtung zur elektrischen Erregung eines Aktors für einen Ultraschallmotor.

Aus den Patentschriften DE 10 2006 054597 A1, WO 20097109606 A1, US 5,214,339, US 5,461,273 und US 5,479,063 sind beispielsweise ein Verfahren und eine Vorrichtung zur Erregung des Aktors eines Ultraschallwellenmotors bekannt. Hier wird jeweils beschrieben, dass die Frequenz der elektrischen Spannung des erregten Ultraschallaktors durch Aufrechterhaltung eines konstanten Phasenunterschieds zwischen der Erreger-Spannung und der Spannung geregelt wird, die durch die auf dem Piezoelement des Ultraschallaktors angeordneten Hilfselektrode generiert wird. Die DE 10 2007 016642 A1, US 2003/111933 A1 und WO 2007/082601 A1 offenbaren jeweils einen Ultraschallaktor, der mit einer Rechteckspannung betrieben wird.

Der Nachteil dieses Verfahrens und der entsprechenden Erregervorrichtung besteht darin, dass der Phasenunterschied zwischen elektrischer Erregerspannung des Aktors und der Spannung der Hilfselektrode von der mechanischen Last am Aktor abhängt. Deshalb ist im Fall des Einwirkens hoher mechanischer Lasten auf den Ultraschallaktor bei diesen Motoren die Frequenz der elektrischen Erregerspannung nicht gleich der mechanischen Resonanzfrequenz des Ultraschallaktors. Das wirkt sich destabilisierend auf die Funktion des Ultraschallmotors aus. Außerdem muss die Hilfselektrode für einen sicheren Betrieb eine große Fläche haben, was wiederum die Fläche für die Erregerelektroden verringert und eine Erhöhung der Erregerspannung nach sich zieht. Ferner muss die Hilfselektrode über einen zusätzlichen Ausgang in Form eines dünnen Drahtes verfügen. Bei hohen Bewegungsgeschwindigkeiten des beweglichen Elementes vermindert dies die Betriebssicherheit der Motoren.

Weiterhin sind beispielsweise aus der Patentschrift US 5,872,418 ein Verfahren und eine Vorrichtung zur Erregung eines Ultraschallmotors bekannt, wobei die Frequenz der elektrischen Erregerspannung des Ultraschallaktors dadurch geregelt wird, dass ein konstanter Phasenunterschied zwischen der den Aktor erregenden Spannung und dem durch diesen fließenden Strom aufrecht erhalten wird. Bei diesem Verfahren und der entsprechenden Vorrichtung wird an das Piezoelement des Ultraschallaktors eine sinusförmige elektrische Spannung angelegt, die den Ultraschallaktor anregt. Die angelegte Sinusspannung bewirkt, dass durch das Piezoelement ein sinusförmiger Strom fließt.

Der Nachteil dieses Verfahren besteht ebenso darin, dass der Phasenunterschied zwischen der elektrischen Erregerspannung und dem durch das Piezoelement fließenden Strom von der mechanischen Last am Ultraschallaktor abhangt. Das ist dadurch bedingt, dass der durch das Piezoelement fließende sinusförmige Strom zwei Bestandteile aufweist, nämlich einen kapazitiven Strom, der durch die elektrische Kapazität des Piezoelements fließt, und einen piezoelektrischen Strom, der durch den Drehwinkel der Domänen des Piezoelementes bestimmt ist. Bei der mechanischen Resonanzfrequenz stellt der piezoelektrische Strom einen so genannten aktiven Strom oder Wirkstrom dar. Bei einer kleinen mechanischen Last am Ultraschallaktor ist der aktive Widerstand des Aktors bedeutend kleiner als sein reaktiver Widerstand. Deshalb ist die Phasenverschiebung zwischen der Erregerspannung und dem durch das Piezoelement fließenden Strom bei der mechanischen Resonanzfrequenz klein und nähert sich Null. Bei einer Erhöhung der am Aktor anliegenden mechanischen Last erhöht sich der aktive Widerstand, wahrend der reaktive Widerstand konstant bleibt. Deshalb bewirkt die Erhöhung der mechanischen Last eine Vergrößerung des Verschiebungswinkels zwischen der Erregerspannung und dem durch das Piezoelement des Ultraschallaktors fließenden Strom.

In Ultraschallmotoren mit einem guten Friktionskontakt zwischen dem Ultraschallaktor und einem durch den Ultraschallaktor anzutreibenden Element kann sich bei einer Erhöhung der mechanischen Last der Phasenverschiebungswinkel von einigen Grad um das Zehnfache und mehr erhöhen. Die Schwingungen der Phasenverschiebung werden dabei nicht nur durch eine mechanische Last am anzutreibenden Element verursacht, sondern auch durch eine Welligkeit der Friktionsoberflache sowie durch eine mechanische Unwucht des anzutreibenden Elementes.

Bei Motoren, bei denen die Frequenz der sinusförmigen elektrischen Erregerspannung des Ultraschallaktors dadurch geregelt wird, dass ein konstanter Phasenunterschied zwischen der Phase dieser Spannung und der Phase des sinusförmigen Stromes des Piezoelementes aufrechterhalten wird, kommt es zu einer Destabilisierung der Funktion des Ultraschallmotors.

Diese Destabilisierung hat zur Folge, dass sich die Erregerspannung erhöht und der erforderliche Strom und die Leistung ansteigen. Außerdem treten Geschwindigkeitsschwingungen des anzutreibenden Elementes auf. Die vom Motor erzeugbare maximale Kraft verringert sich. Diese Kraft hangt von der Lage des anzutreibenden Elementes ab. Beim Anliegen einer großen Last kann dadurch der Motor zum Stillstand kommen und sich der Aktor erhitzen. Durch besagte Erhitzung engt sich der Temperatureinsatzbereich für den Ultraschallmotor ein.

Daher ist es Ziel der Erfindung, ein Verfahren und eine Vorrichtung zur Erregung des Aktors eines Ultraschallmotors und eine entsprechende Erregervorrichtung bereitzustellen, durch das bzw. die es gelingt, die Betriebsstabilität des Motors beim Anliegen hoher mechanischer Lasten am Aktor zu erhöhen, die erforderliche Erregerspannung abzusenken, den Strombedarf und die elektrische Leistung zu verringern und den Temperatureinsatzbereich zu erweitern.

Die zuvor genannten Aufgabe wird gelöst durch ein Verfahren zur elektrischen Erregung eines Aktors für einen Ultraschallmotor mit den Merkmalen des Anspruchs 1 sowie einer Vorrichtung zur elektrischen Erregung eines Aktors für einen Ultraschallmotor mit den Merkmalen des Anspruchs 3. Vorteilhafte Ausgestaltungen ergeben sich aus den abhängigen Patentansprüchen.

Grundlegende Idee der Erfindung ist es, den durch den Aktor fließenden piezoelektrischen Strom vom kapazitiven Ladestrom des Aktors zu trennen und die Phasenverschiebung des separierten piezoelektrischen Stromes für die Regelung der Frequenz der Erregerspannung des Ultraschallaktors zu verwenden.

Im Folgenden werden die Begriffe ,Aktor für einen Ultraschallmotor', 'Ultraschallaktor' oder auch nur ,Aktor' synonym verwendet.

Die Erfindung schafft ein Verfahren zur elektrischen Erregung eines Aktors für einen Ultraschallmotor mit einer mechanischen Resonanzfrequenz Fₘ, wobei der Ultraschallmotor wenigstens einen akustischen Stehwellengenerator aufweist, der eine Erregerelektrode und eine allgemeine Elektrode umfasst, wobei sich zwischen der Erregerelektrode und der allgemeinen Elektrode eine elektrische Kapazität C₀ ausbildet. Bei dem erfindungsgemäßen Verfahren erfolgt in einem ersten Schritt das Anlegen einer rechteckigen Erregerspannung U_{g} an die Erregerelektrode und die allgemeine Elektrode des wenigstens einen akustischen Stehwellengenerators, wobei sich die Frequenz der rechteckigen Erregerspannung von der mechanischen Resonanzfrequenz Fₘ des Aktors unterscheidet. Sodann wird mit Hilfe eines Rückkopplungselements eine elektrische Spannung U_{g} bereitgestellt, wobei die elektrische Spannung U_{g} proportional zu einem durch den Stehwellengenerator fließenden Strom I_{g} ist, und der Strom I_{g} ein Summenstrom aus einem piezoelektrischen Strom I_{g} sowie einem Lade- und Entladestrom Iₑ der elektrischen Kapazität C₀ ist. Darauf folgt der Schritt der Separierung einer elektrischen Spannung Uₚ aus der elektrischen Spannung Uₑ mit Hilfe eines Impulsfilters, wobei die elektrische Spannung Uₚ proportional zum piezoelektrischen Strom Iₚ und die elektrische Spannung Uₑ proportional zum Lade- und Entladestrom Iₑ der elektrischen Kapazität C₀ ist. Schließlich wird die Frequenz der rechteckigen Erregerspannung so geändert, dass die Phasenverschiebung zwischen dem piezoelektrischen Strom Iₚ und der rechteckigen Erregerspannung U_{g} im Wesentlichen Null wird.

Eine erfindungsgemäße Vorrichtung zur elektrischen Erregung eines piezoelektrischen Aktors eines Ultraschallmotors, wobei der Aktor wenigstens einen akustischen Stehwellengenerator aufweist, umfasst wenigstens einen Leistungsverstärker, ein Rückkopplungselement, ein Filter und eine Steuerspannungs-Formierungseinrichtung. Hierbei ist der wenigstens eine Leistungsverstärker als Spannungsumschalter für eine Versorgungsspannung des Aktors ausgeführt, wobei der Spannungsumschalter mit dem wenigstens einen akustischen Stehwellengenerator direkt oder indirekt verbunden ist. Weiterhin ist das Rückkopplungselement in Reihe mit dem akustischen Stehwellengenerator geschaltet, so dass durch dieses der gleiche Strom wie durch den Stehwellengenerator fließt, und der Filter ist als Impulsfilter der elektrischen Spannung, die durch das Rückkopplungselement erzeugt wird, ausgeführt. Zudem ist ein Ausgang des Filters mit einem Eingang der Steuerspannungs-Formierungseinrichtung und die Steuerspannungs-Formierungseinrichtung mit einem Eingang des wenigstens einen Leistungsverstärkers verbunden.

Das erfindungsgemäße Verfahren bzw. die erfindungsgemäße Vorrichtung ermöglichen es, die optimale Frequenz der Erregerspannung für den Ultraschallaktor zu halten. Diese Frequenz wird unabhängig von der auf den Aktor des Ultraschallmotors einwirkenden Lasten andauernd gleich der mechanischen Resonanzfrequenz des Aktors gehalten, wodurch sich die Betriebsstabilität des Ultraschallmotors erhöht. Der Ultraschallmotor arbeitet so stets in einem optimalen Betriebsregime. Dadurch verringert sich die Höhe der Erregerspannung, der erforderliche Strom und die erforderliche Leistung werden reduziert und der Motor erhitzt sich weniger stark.

Gemäß einer zweckmäßigen Ausgestaltung des erfindungsgemäßen Verfahrens wird der durch den Stehwellengenerator fließende piezoelektrische Strom Iₚ zusätzlich stabilisiert. Dadurch kann die Schwingungsgeschwindigkeit der im Aktor erzeugten Welle und damit auch die Bewegungsgeschwindigkeit des anzutreibenden Elements zusätzlich stabilisiert werden.

Gemäß einer zweckmäßigen Ausgestaltung der erfindungsgemäßen Vorrichtung ist der Spannungsumschalter als Halbbrückenleistungsverstärker oder als Brückenleistungsverstärker oder als Zweitaktleistungsverstärker ausgeführt. Hierdurch ist es möglich, den inneren Widerstand des Spannungsumschalters deutlich zu verringern und damit die Impulsdauer des kapazitiven Lade- und Entladestroms Iₑ maximal zu verkürzen.

Es kann vorteilhaft sein, dass das Rückkopplungselement einen niedrigohmigen Wirkwiderstand oder einen Messtransformator für einen elektrischen Strom umfasst. Hierdurch kann der Phasenfehler bei der Wandlung des Stroms I_{g} in die Spannung U_{g} deutlich reduziert werden.

Weiterhin kann es von Vorteil sein, dass das Impulsfilter als ein auf die mechanische Resonanzfrequenz Fm des Aktors abgestimmtes Bandfilter für die vom Rückkopplungselement generierte Spannung ausgeführt ist. Die Ausführung des Impulsfilters 23 als Bandfilter 33 ermöglicht es, den Phasenfehler bei der mechanischen Resonanzfrequenz Fₘ zu eliminieren.

Es kann sich als günstig erweisen, dass das Impulsfilter als Tiefpassfilter oder als Integrator für die durch das Rückkopplungselement erzeugte Spannung ausgeführt ist. Dadurch gelingt ein äußerst einfacher Aufbau des Impulsfilters.

Zudem kann es sich als günstig erweisen, dass das Impulsfilter einen Ausschalter für die vom Rückkopplungselement erzeugte Spannung umfasst, und ein Steuereingang des Ausschalters über einen Flankendetektor mit dem Spannungsumschalter verbunden ist.

Weiterhin kann es sich als günstig erweisen, dass das Impulsfilter als Spannungskomparator ausgeführt ist.

Außerdem kann es sich als günstig erweisen, dass die Vorrichtung zur elektrischen Erregung eines piezoelektrischen Aktors eines Ultraschallmotors als Autogenerator ausgeführt ist.

Es kann von Vorteil sein, dass die Steuerspannungs-Formierungseinrichtung einen Phasendetektor und einen gesteuerten Generator für eine Rechteckspannung umfasst.

Es kann ebenso von Vorteil sein, dass die Steuerspannungs-Formierungseinrichtung einen symmetrischen PWM-Modulator aufweist. Durch Verwendung eines symmetrischen PWM-Modulators ist es möglich, den Strom Iₚ und damit die Bewegungsgeschwindigkeit des anzutreibenden Elements zu regeln.

Darüber hinaus kann es von Vorteil sein, dass die Vorrichtung zur elektrischen Erregung eines piezoelektrischen Aktors eines Ultraschallmotors einen Regler für die elektrische Spannung, die den Leistungsverstärker speist, aufweist. Dies ermöglicht es ebenso, den Strom Iₚ und damit die Bewegungsgeschwindigkeit des anzutreibenden Elements zu regeln.

Es kann sich als günstig erweisen, dass die Vorrichtung zur elektrischen Erregung eines piezoelektrischen Aktors eines Ultraschallmotors ein Stabilisierungssystem für den durch den Stehwellengenerator fließenden piezoelektrischen Strom aufweist.

Außerdem kann es sich als günstig erweisen, dass die elektronischen Glieder der Vorrichtung zur elektrischen Erregung eines piezoelektrischen Aktors eines Ultraschallmotors teilweise oder vollständig durch einen programmierbaren Digitalprozessor des Typs DSP (Digitaler Signal-Prozessor oder Digital Signal Processor) oder FPGA (Field Programmable Gate Array) realisiert sind. Hierdurch ist es möglich, den Aufbau der elektrischen Erregervorrichtung zu vereinfachen und damit deren Kosten zu senken und gleichzeitig deren Störunempfindlichkeit zu erhöhen.

### Kurze Beschreibung der Zeichnungen

Es zeigen in schematischer und nicht maßstabsgetreuer Weise:
Fig. 1: Erfindungsgemäße Erregervorrichtung für den Aktor eines Ultraschallmotors (Darstellungen 10 bis 12: unterschiedliche Ausrichtungen des Polarisationsvektors in Bezug auf die Elektroden bei dreischichtiger Struktur des Aktors; Darstellung 13: Aktor in Multilayer-Ausführung),
Fig. 2: Erfindungsgemäße Erregervorrichtung (Darstellungen 17 bis 19: ein- und mehrphasige Ansteuerung des Aktors),
Fig. 3-5: Ausführungsformen der erfindungsgemäßen Erregervorrichtung,
Fig. 6, 7: Unterschiedliche Ausführungsformen für das Impulsfilter,
Fig. 8: Ersatzschaltung für den Stehwellengenerator,
Fig. 9: Frequenzabhängigkeit der Strome (Darstellung 40) und der Phasenunterschiede (Darstellung 41) des Ultraschallwellengenerators der erfindungsgemäßen Erregervorrichtung,
Fig. 10: Darstellungen 42-45: Zeitabhängigkeit der verschiedenen elektrischen Spannungen und Ströme,
Fig. 11: Frequenzabhängigkeiten des Ultraschallwellengenerators,
Fig. 12: Phasenverschiebung zwischen Strom und Spannung bei Veränderung der Frequenz der Erregerspannung und
Fig. 13-17: Weitere Ausführungsformen der erfindungsgemäßen Erregervorrichtung.

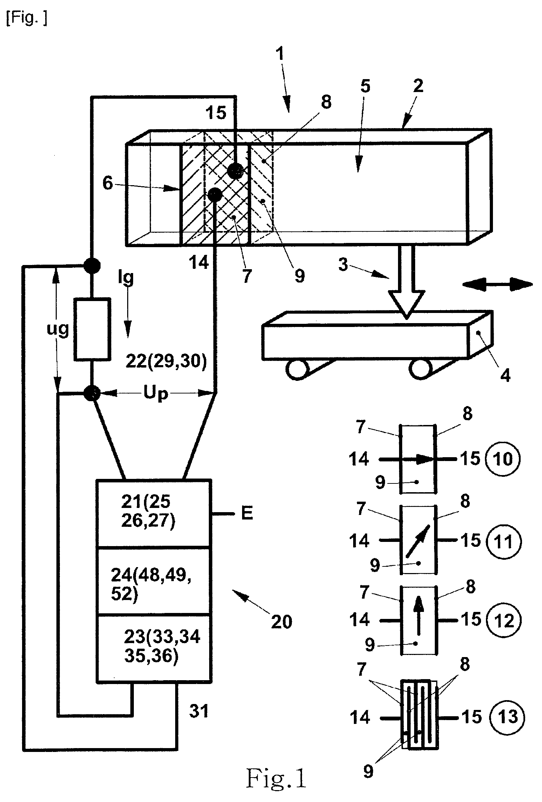

Fig. 1 zeigt eine erfindungsgemäße Erregervorrichtung für einen Ultraschallaktor 2 eines Ultraschallmotors 1. In diesem Ultraschallmotor 1 ist der Ultraschallaktor 2 mittels einer Friktionsverbindung bzw. mittels eines Friktionskontakts 3 mit einem anzutreibenden Element 4, das eine Linear- oder Drehbewegung vollführt, verbunden.

Der Aktor 2 besteht aus einem als Platte ausgeführten akustischen Resonator 5, der jedoch ebenso als Scheibe, als Zylinder oder in einer anderen beliebigen Form, die durch die Konstruktion des Ultraschallaktors 2 vorgegeben ist, ausgeführt sein kann. Der Resonator 5 besteht aus piezokeramischem Material, kann jedoch auch aus Metall, Oxidkeramik, Metallkeramik, einem monokristallinen Material oder einem anderen Werkstoff mit hoher mechanischer Güte sein. Der Resonator 5 kann einen geschlossenen oder einen offenen Wellenleiter für die akustische Ultraschallwelle darstellen.

Der Resonator 5 weist einen Generator 6 für die akustische Stehwelle auf. Dieser ist Teil des Resonators 5. Demgegenüber kann der Generator 6 auch ein Piezoelement darstellen, das mit dem Resonator 5 verbunden ist (in den Fig. nicht dargestellt). Der Generator 6 gemäß Fig. 1 hat eine dreischichtige Struktur, wobei eine Schicht die Erregerelektrode 7 und eine Schicht die allgemeine Elektrode 8 darstellt, und zwischen der Erregerelektrode 7 und der allgemeinen Elektrode 8 eine Schicht piezoelektrischer Keramik 9 angeordnet ist. Der Polarisationsvektor der Piezokeramikschicht ist senkrecht zu den Elektroden 7, 8 ausgerichtet, wie dies auch in Darstellung 10 von Fig. 1 dargestellt ist. Es ist jedoch ebenso denkbar, dass der Polarisationsvektor der Piezokeramikschicht geneigt zu den Elektroden 7, 8 (Darstellung 11 von Fig. 1) oder parallel zu den Elektroden 7, 8 (Darstellung 12 von Fig. 1) ausgerichtet ist. Weiterhin ist denkbar, dass der Polarisationsvektor in unterschiedlichen Bereichen des Generators 6 unterschiedliche Ausrichtung besitzt. Hierbei ist zudem denkbar, dass der Polarisationsvektor in einem Bereich eine senkrechte Ausrichtung besitzt, und in einem anderen Abschnitt zwar ebenso eine senkrechte, aber entgegen gesetzte Ausrichtung, d.h. eine antiparallele Ausrichtung, besitzt.

Es ist möglich, dass der Generator 6 eine Multilayerstruktur aufweist, in der die Elektroden 7, 8 und die piezokeramische Schicht 9, wie in Darstellung 13 der Fig. 1 gezeigt, abwechselnd angeordnet sind. Hierbei sind die im vorherigen Abschnitt beschriebenen unterschiedlichen Ausrichtungen des Polarisationsvektors in den einzelnen Schichten denkbar.

Zudem kann der Stehwellengenerator streifenförmige Elektroden aufweisen (in den Fig. nicht dargestellt).

Zum Anlegen einer elektrischen Spannung haben die Elektroden 7 und 8 die Ausgänge 14, 15. Die Ausgänge 14, 15 sind als litzenartige Leiter ausgeführt, sie können jedoch ebenso als Federelemente oder elektrisch leitende Gummielemente ausgeführt sein.

Zwischen den Elektroden 7 und 8 des Generators 6 ist die elektrische Kapazität Co vorhanden.

Der Generator 6 dient zur Erzeugung einer akustischen Ultraschallstehwelle im Resonator 5, die der Ultraschallmotor für seinen Betrieb nutzt. Diese Welle kann eine Longitudinalwelle, eine Biegewelle, eine Scherwelle, eine Torsionswelle, eine Volumenwelle, eine ebene Welle, eine Oberflachenwelle, eine symmetrische, eine asymmetrische oder eine andere akustische Welle sein. Typ und Form der genutzten Welle werden durch die geometrische Form des Resonators 5, die Form der Elektroden 7 und 8, die Ausrichtung des Polarisationsvektors der piezoelektrischen Keramik bezogen auf die Elektroden 7 und 8 und die Frequenz der Erregerspannung U_{g} bestimmt.

Bei der im Aktor 2 erzeugten Welle besitzen die Punkte des Resonators 5 bei der Frequenz, die gleich der mechanischen Resonanzfrequenz Fₘ ist, ihre maximale Schwingungsgeschwindigkeit vₚ. Die mechanische Resonanzfrequenz Fₘ stellt die Arbeitsfrequenz des Ultraschallaktors 2 und dementsprechend auch die des Ultraschallmotors 1 dar. Bei dieser Frequenz hat der Ultraschallmotor 1 optimale mechanische Kennwerte.

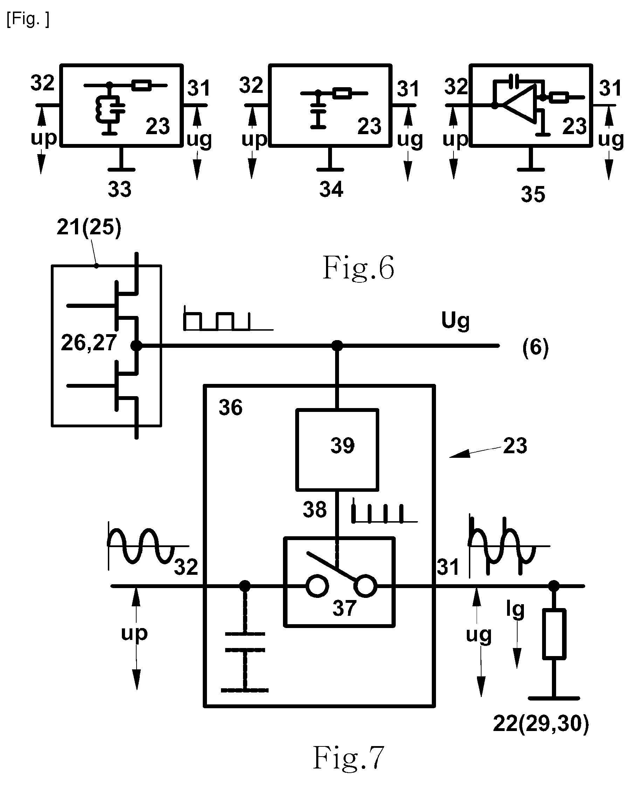

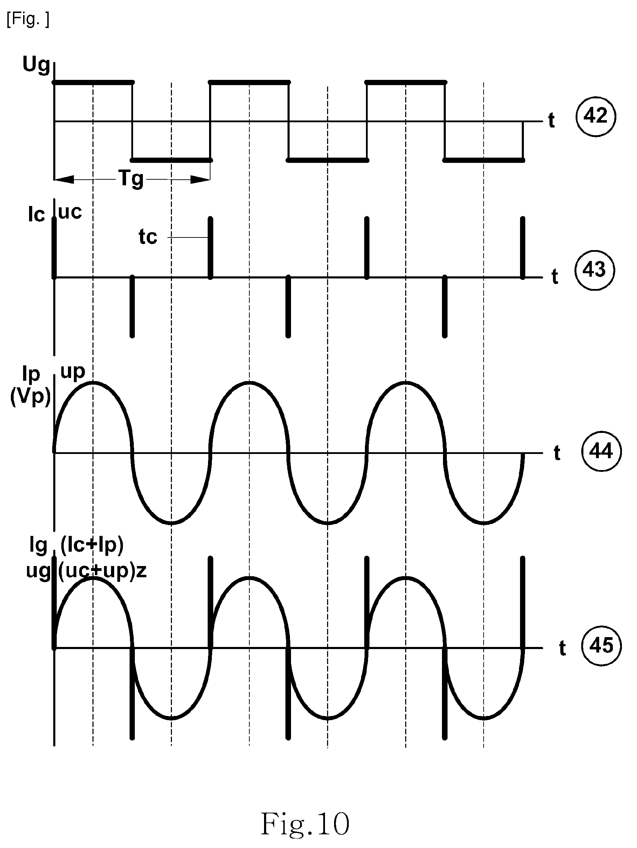

Die elektrische Erregervorrichtung 20 weist einen Leistungsverstärker 21, ein Rückkopplungselement 22, ein Impulsfilter 23 für die vom Rückkopplungselement 22 bereitgestellte Spannung U_{g}, und eine Steuerspannungs-Formierungseinrichtung 24 auf. Der Leistungsverstärker 21 ist als Spannungsumschalter 25 ausgeführt. Hierbei kann der Spannungsumschalter einen Halbbrücken- oder Brückenleistungsverstärker 26, oder einen Zweitaktleistungsverstärker 27 bilden. Der Leistungsverstärker 21 wird von der Gleichspannung E gespeist und stellt die rechteckige Wechselspannung U_{g} (siehe Darstellung 42 von Fig. 10) bereit. Die Ausgänge 14 und 15 der Elektroden 7,8 des Generators der akustischen Welle 6 sind über das Rückkopplungselement 22 mit dem Leistungsverstärker 21 verbunden. Das Impulsfilter 23 besitzt den Eingang 31, an dem die Spannung U_{g} anliegt, und den Ausgang 32, an dem die Spannung up anliegt. Das Impulsfilter 23 ist als Bandfilter 33 aufgebaut. Es kann jedoch auch als Tiefpassfilter 34 oder als Integrator 35 (siehe Fig. 6) aufgebaut sein. Zudem kann das Impulsfilter 23 ein Komparator oder eine Impulsvorrichtung 36 (siehe Fig. 7) sein. Ein solches Filter kann einen Ausschalter 37 für die vom Rückkopplungselement 22 bereitgestellte Spannung U_{g} enthalten, dessen Steuereingang 38 über den Flankendetektor 39 mit dem Spannungsumschalter 21 verbunden ist. Darüber hinaus kann das Impulsfilter 23 aus passiven oder aktiven elektronischen Bauelementen bestehen bzw. kann mit frei programmierbaren Mikrocontrollern aufgebaut sein.

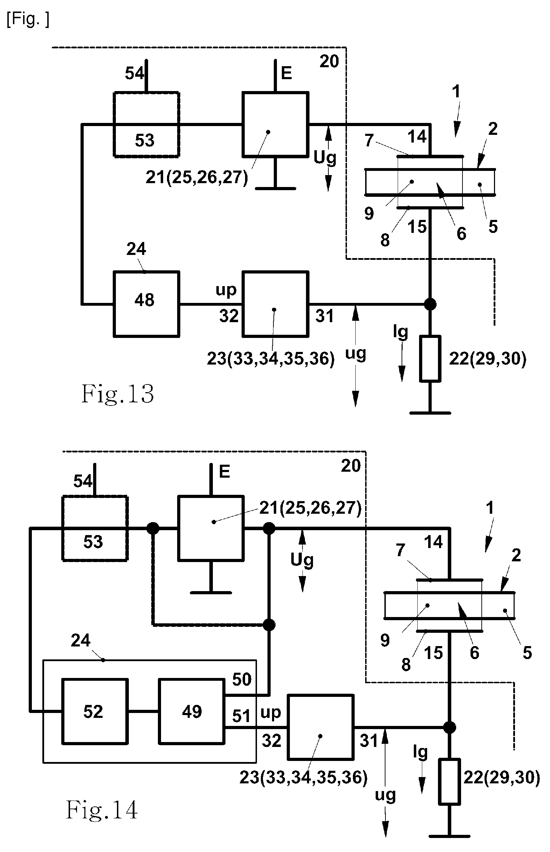

Das Rückkopplungselement 22 dient zur Umwandlung des durch den Generator 6 fließenden Stroms I_{g} in eine sich proportional zu diesem Strom verhaltende elektrische Spannung U_{g}. Es ist als niedrig-ohmiger Widerstand 29 ausgeführt, kann jedoch ebenso als Messtransformator für Strom-Spannung 30 (siehe Fig. 14) oder in einer anderen Ausführung realisiert sein.

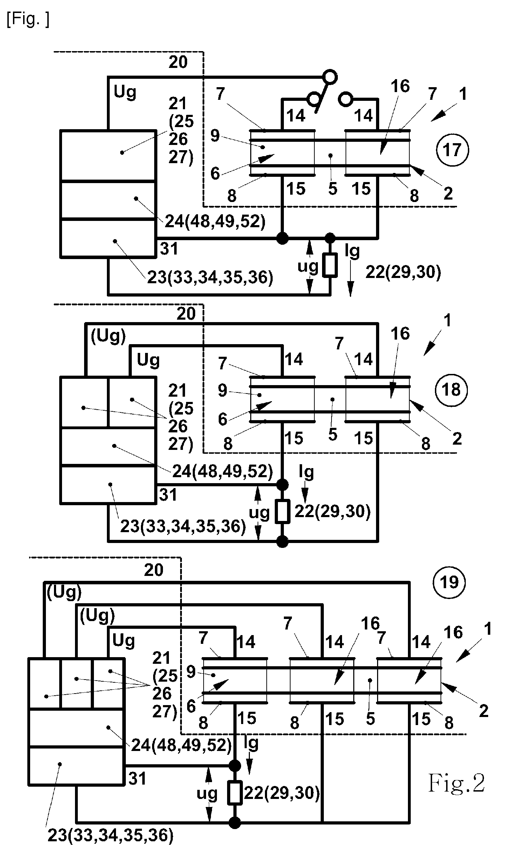

Gemäß den Darstellungen 17 bis 19 der Fig. 2 kann der Resonator 5 einen oder mehrere Zusatzgeneratoren 16 für eine akustische Welle mit den Elektroden 7 und 8 aufweisen. Die Zusatzgeneratoren 16 können mit Hilfe der Rechteckspannung U_{g} oder mit einer anderen Spannung mit beliebiger nicht-rechteckiger Form angesteuert werden. Die Zusatzgeneratoren 16 im Aktor 2 können eine akustische Ultraschallwelle gleichen Typs wie die des (Haupt-)Generators 6 erzeugen; sie können jedoch ebenso eine akustische Ultraschallwelle anderen Typs als die des (Haupt-)Generators 6 produzieren. Zudem können die Zusatzgeneratoren 16 die gleiche oder eine von Fm abweichende mechanische Resonanzfrequenz aufweisen, z. B. F_{z}. Außerdem können die Zusatzgeneratoren 16 eine von der Kapazität Co des Generators 6 abweichende Kapazität aufweisen, z. B. C_{z}.

Gemäß Darstellung 17 der Fig. 2 kann der Aktor 2 einphasig und gemäß Darstellung 18 der Fig. 2 zweiphasig ausgeführt sein. Eine entsprechende dreiphasige Ausführung ist in Darstellung 19 der Fig. 2 gezeigt. Selbstverständlich ist auch eine Ansteuerung mit mehr als drei Phasen denkbar.

Bei gemeinsamer Erregung der Generatoren 6 und 16 können sich im Aktor 2 zwei, drei oder mehr Stehwellen unabhängig voneinander ausbreiten. Die im Aktor 2 sich ausbreitenden Stehwellen können reine Laufwellen oder eine Kombination von Lauf- und Stehwellen sein.

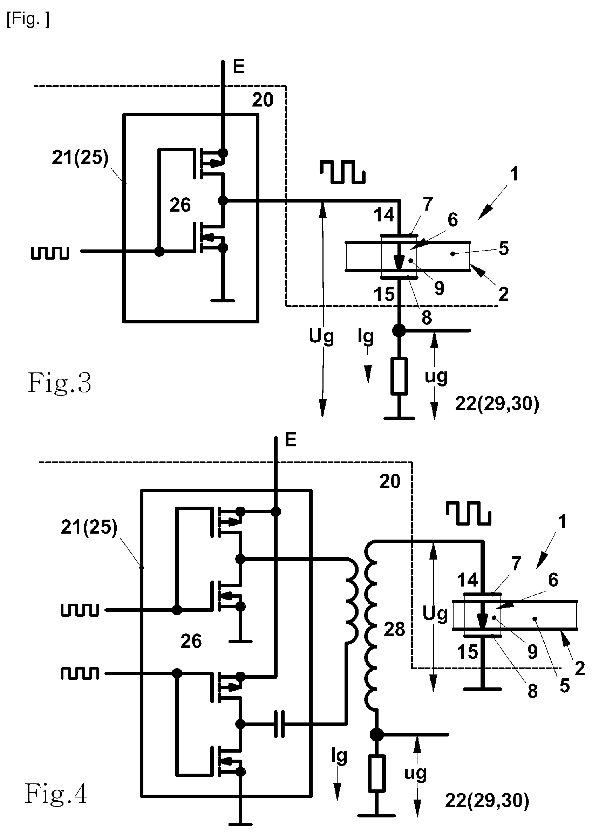

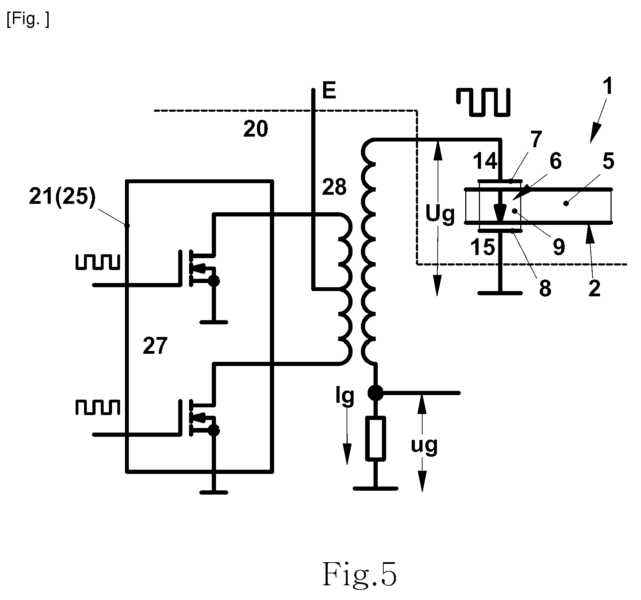

Gemäß Fig. 4 und Fig. 5 sind die Ausgänge 14 und 15 der Elektroden 7, 8 des Stehwellengenerators 6 mit Hilfe des Anpassungstransformators 28 mit dem Leistungsverstärker 21 verbunden.

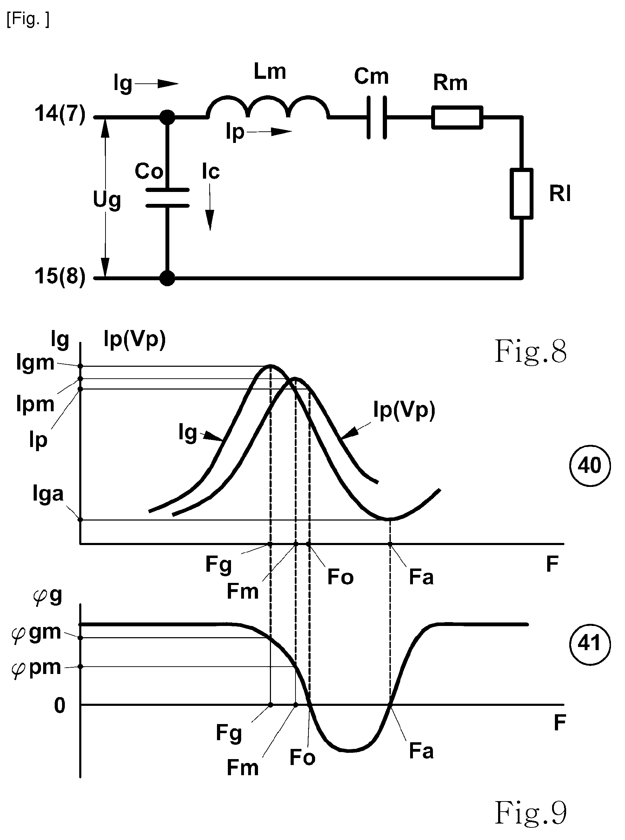

Fig. 8 zeigt eine Ersatzschaltung zur Abbildung der elektromechanischen Parameter des Stehwellengenerators 6 für den Ultraschallmotor 1 für den Bereich der mechanischen Resonanzfrequenz Fₘ . In dieser Schaltung bedeuten: Co =elektrische Kapazität, die sich zwischen den Elektroden 7 und 8 ausbildet; Lₘ = elektrische Induktivität, welche proportional zur Masse des Aktors 2 ist; Cₘ = elektrische Kapazität, welche proportional zur elastischen Nachgiebigkeit des Aktors 2 ist; Rₘ =elektrischer Widerstand, welcher proportional zu den mechanischen Verlusten im Aktor 2 ist; R₁ = elektrischer Widerstand, welcher proportional zum mechanischen Widerstand der Last am Aktor 2 ist.

An die Schaltung wird die elektrische Spannung U_{g} angelegt, welche bewirkt, dass durch die Schaltung der Strom I_{g} fließt. Dieser Strom fließt über die Ausgänge 14, 15 und die Elektroden 7, 8 des Stehwellengenerators 6.

Der Strom I_{g} ist ein Summenstrom aus folgenden zwei Bestandteilen:
Strom Iₑ = Lade- und Entladestrom der elektrischen Kapazität C₀ des Generators 6, und Iₚ = piezoelektrischer Strom, vorgegeben durch den Drehwinkel der Domänen der piezoelektrischen Keramikschicht 9 des Generators 6, der die Schwingungsgeschwindigkeit vₚ (oder die Schwingungsamplitude) des Generators 6 wiedergibt.

Wenn die Spannung U_{g} - entgegen der Idee der vorliegenden Erfindung - eine sinusförmige Spannung darstellt, weisen auch die Ströme I_{g}, Iₑ und Iₚ (vp) eine Sinusform auf. In diesem Fall besitzen die Amplitude des Stroms I_{g} und die Amplitude des Stroms Iₚ (vₚ) die in der Darstellung 40 der Fig. 9 dargestellte Abhängigkeit. Die Darstellung 41 in Fig. 9 zeigt die Abhängigkeit der Phasenverschiebung der Spannung U_{g} und des Stroms Iₚ von der Frequenz.

In den Darstellungen 40 und 41 der Fig. 9 sind besondere Frequenzen erkennbar. Dabei ist F_{g} die Resonanzfrequenz des Strom I_{g}. Bei dieser Frequenz hat der Strom Ig seinen Maximalwert Igm und der Winkel der Phasenverschiebung CPg ist gleich cpgm. Fm ist die mechanische Resonanzfrequenz des Stroms Ip(Vp). Bei dieser Frequenz hat der Strom Iₚ (vₚ) seinen Maximalwert Iₚₘ und der Winkel der Phasenverschiebung Φ_{g} ist gleich Φₚₘ. F₀ ist die Frequenz, bei der die Phasenverschiebung für den Strom I_{g} gleich Null ist. Fa ist die Antiresonanzfrequenz des Strom I_{g}. Bei den Frequenzen F₀ und Fₐ ist der Phasenverschiebungswinkel Φ_{g} gleich Null.

Das Verfahren zur Erregung des Aktors des Ultraschallmotors entsprechend der Patentschrift US 5,872,418 besteht im Gegensatz zu dem erfindungsgemäßen Verfahren gerade darin, dass an den Aktor - wie zuvor beschrieben - eine sinusförmige elektrische Spannung U_{g} angelegt wird und die Frequenzregelung dieser Spannung durch Stabilisierung der Phasenverschiebung cppm zwischen dieser Spannung und dem durch den Aktor fließenden Strom I_{g} erfolgt.

Da bei der Frequenz Fm die Induktivität Lm durch die Kapazität Cₘ kompensiert wird, wird der Phasenverschiebungswinkel Φₚₘ durch die Kapazität C₀ und der Summe der Widerstande Rm+R1 bestimmt. Der Widerstand Rₘ ist wesentlich kleiner als der Widerstand Rⱼ. Deshalb hat eine Änderung des Widerstands der Last Rⱼ eine Änderung des Winkels Φₚₘ für die Frequenz Fₘ zur Folge.

Folglich führt in der Lösung gemäß der US 5,872,418 eine Änderung der auf den Aktor des Ultraschallmotors einwirkenden Last ( Rⱼ ) zu einer Destabilisierung der Frequenz der Erregerspannung U_{g}. Diese Frequenz weicht damit von der mechanischen Resonanzfrequenz Fₘ ab. Bei größeren auf den Aktor einwirkenden Lasten kann die Destabilisierung eine bedeutende Größenordnung erreichen, was nachteilig für den Betrieb des Ultraschallmotors ist.

In der erfindungsgemäßen Lösung wird an den Generator 6 des Aktors 2 hingegen eine elektrische Rechteckspannung U_{g} angelegt, deren Form in Darstellung 42 der Fig. 10 gezeigt ist. Die Vorder- und Rückflanken jedes Spannungsimpulses bewirken eine schnelle Auf- und Entladung der Kapazität C₀. Das Auf- und Entladen der Kapazität C₀ erfolgt in der sehr kurzen Zeit Tₑ, die um ein mehrfaches kleiner als die Periode Tg der Erregerspannung U_{g} ist. Diese Zeit wird durch den kleinen Widerstand des leitenden Transistors des Verstärkers 26 und der Größe der Kapazität C₀ bestimmt. Deshalb stellt der Strom Iₑ eine Serie von kurzen Impulsen dar, wie dies aus Abbildung 43 der Fig. 10 zu erkennen ist. Die Stromimpulse Iₑ fallen zeitlich mit den Hanken der Impulse der Rechteckspannung U_{g} zusammen.

Mit dem Strom Iₑ fließt durch den Generator 6 der piezoelektrische Strom Ip, der sich proportional zur Schwingungsgeschwindigkeit Vₚ verhält. Da der Generator 6 Teil des akustischen Resonators 5 ist, weist der Strom Iₚ eine Sinusform auf (siehe Darstellung 44 von Fig. 10).

Der Summenstrom I_{g} besteht aus dem Strom Iₑ und dem Strom Iₚ, der durch die Elektroden 7, 8 des Generators 6 (siehe Darstellung 45 von Fig. 10) fließt.

Da bei der mechanischen Resonanzfrequenz Fm die Induktivität Lm durch die Kapazität Cₘ kompensiert wird, stellt bei dieser Frequenz der Strom Iₚ einen aktiven Strom bzw. Wirkstrom dar, d.h. die Phasenverschiebung des Stromes ist - bezogen auf die rechteckige Erregerspannung U_{g} - gleich Null.

Aus dem zuvor Gesagten folgt, dass bei der erfindungsgemäßen-Erregung des Generators 6 mit einer Rechteckspannung Ug der Frequenz Fm eine Änderung des Lastwiderstandes Rⱼ zu keiner Änderung der Phase des Strom I_{g} führt, d.h. der Phasenunterschied bleibt gleich Null.

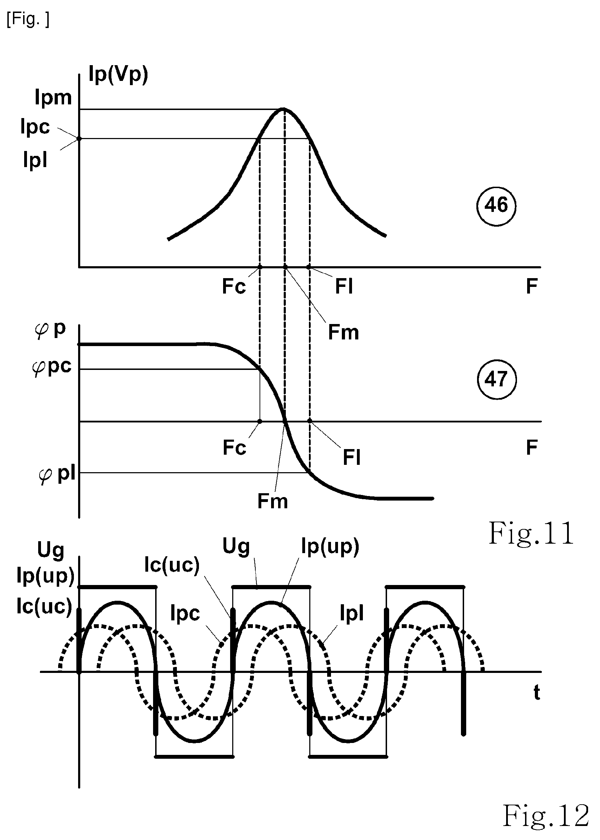

Bei Verringerung der Frequenz der Erregerspannung U_{g} von Fₘ auf Fₑ beginnt der Strom Ipe der Spannung U_{g} um den Winkel Φ_{pc} vorauszueilen, d.h. der piezoelektrische Strom nimmt einen kapazitiven Charakter an. Bei einer Erhöhung der Frequenz der Erregerspannung von Fm auf E beginnt der Strom Ipj der Spannung U_{g} um den Winkel Φₚ₁ hinterherzulaufen, d.h. die der piezoelektrische Strom nimmt einen induktiven Charakter an (siehe hierzu auch Fig. 11, 12). Die Abhängigkeit der Phasenverschiebung des piezoelektrischen Stromes Iₚ (Vₚ) von der Frequenz F hat über den gesamten Bereich eine glatte und eindeutige Abhängigkeit, wie aus Darstellung 47 der Fig. 11 ersichtlich.

Vom Aufbau her bildet die elektrische Erregervorrichtung 20 der Erfindung ein System zur Regelung der Frequenz der Erregerspannung U_{g} und nutzt dazu die Stabilisierung des Phasenverschiebungswinkels zwischen der Rechteckerregerspannung U_{g} und dem piezoelektrischen Strom Iₚ.

Hierbei sind verschiedene Prinzipien für die Frequenzregelung denkbar. Beispielswiese kann die Erregervorrichtung 20 ein Autogenerator mit positiver Rückkopplung sein, wobei bei der Frequenz Fₘ der Phasenverschiebungswinkel im Rückkopplungskreis gleich Null und der Verstärkungskoeffizient größer eins ist. In diesem Fall ist die Steuerspannungsformierungsvorrichtung 24 als begrenzender Verstärker 48 ausgeführt (siehe Fig. 13).

Die Erregervorrichtung 20 kann zudem ein PLL-System zur Frequenzregelung mit negativer Rückkopplung sein. In diesem Fall besteht die Steuerspannungs-Formierungseinrichtung 24 aus einem Phasendetektor 49 mit einem Referenzeingang 50 und einem Messeingang 51 sowie einem gesteuerten Generator 52 (siehe Fig. 14).

Unabhängig vom angewandten Prinzip für die Frequenzregelung umfasst die elektrische Erregervorrichtung 20 einen symmetrischen PWM-Modulator 53 mit einem Steuereingang 54, wobei die Erregerspannung U_{g} eine breitenmodulierte Rechteckspannung darstellt.

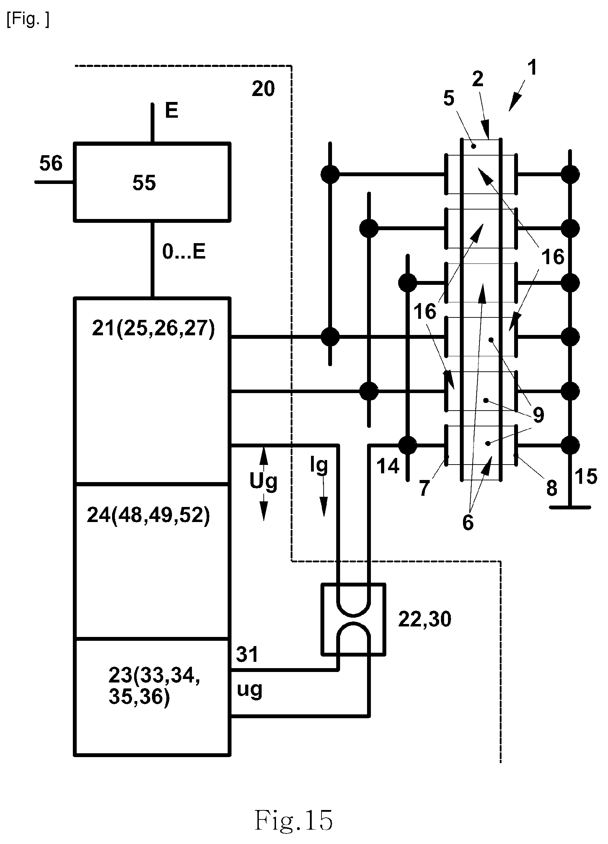

Fig. 15 zeigt eine elektrische Erregervorrichtung 20, die einen Regler 55 für die elektrische Versorgungsspannung E enthalt, die die Spannungsversorgung für den Leistungsverstärker 21 mit einem Steuereingang 56 darstellt. Dieser Regler 55 kann z.B. als DC-DC-Wandler ausgeführt sein, der wie ein PWM-Modulator arbeitet.

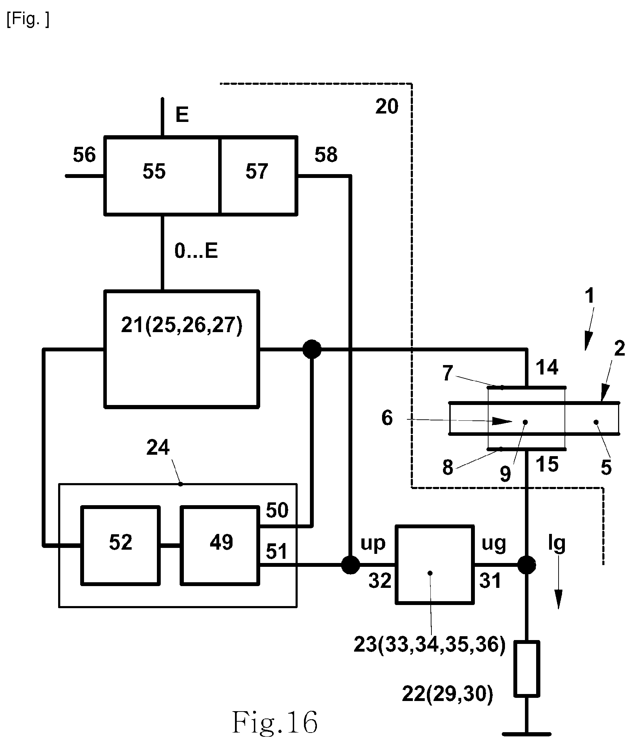

Fig. 16 zeigt eine Variante der elektrischen Erregervorrichtung 20, die ein Stabilisierungssystem 57 für den durch den Stehwellengenerator 6 fließenden piezoelektrischen Strom Iₚ aufweist. Dazu hat das Stabilisierungssystem 57 einen mit dem Ausgang 32 des Impulsfilters 23 verbundenen Messeingang 58.

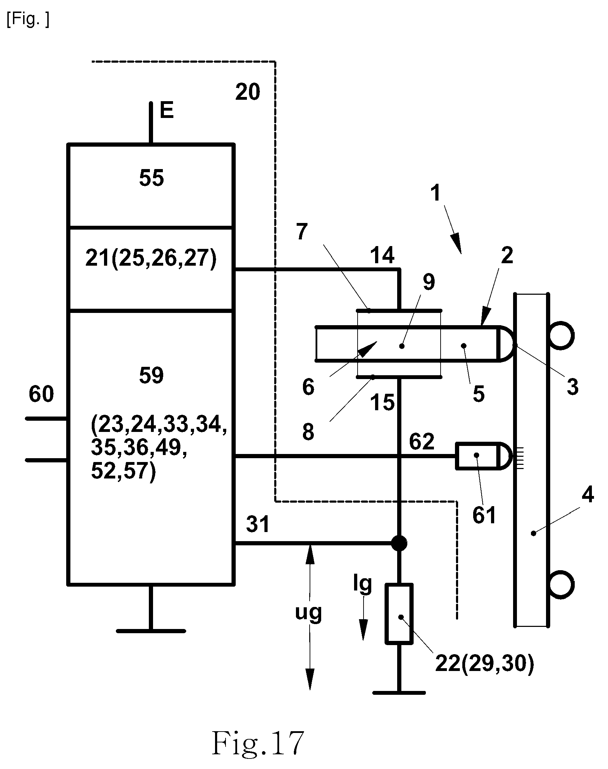

Fig. 17 zeigt eine elektrische Erregervorrichtung 20, in der die Funktion der elektrischen Glieder Impulsfilter 23, Steuerspannungsformierungsvorrichtung 24, Bandfilter 33, Tiefpassfilter 34, Integrator 35, Impulsvorrichtung 36, Phasendetektor 49, gesteuerter Generator 52 und Stabilisierungssystem 57 teilweise bzw. vollständig durch einen entsprechend programmierten Digitalprozessor des Typs DSP oder FPGA realisiert sind. Der Digitalprozessor 59 kann den Interfaceport 60 aufweisen.

Es ist möglich, das anzutreibende Element 4 des Ultraschallmotors 1 mit einem Lagegeber 61 auszustatten, dessen Ausgang 62 mit dem Digitalprozessor 59 verbunden Funktionsbeschreibung Das erfindungsgemäße Verfahren zur elektrischen Erregung des Aktors 2 des Ultraschallmotors 1 beruht darauf, dass an die Erregerelektrode 7 und die allgemeine Elektrode 8 des Hauptgenerators 6 für die akustische Ultraschallstehwelle des Aktors 2 die elektrische Rechteckerregerspannung U_{g} angelegt wird, deren Frequenz F sich zu Beginn geringfügig von der mechanischen Resonanzfrequenz Fₘ des Aktors 2 unterscheidet. Anschließend wird durch das Rückkopplungselement 22 die elektrische Spannung U_{g}, welche der durch den Generator 6 des Aktor 2 fließenden Stroms I_{g} proportional ist, abgegriffen. Danach wird mit Hilfe des Impulsfilters 23 die Spannung Uₚ, die sich proportional zum piezoelektrischen Strom Iₚ verhält, aus der Spannung ue, die proportional dem Lade- und Entladestrom Iₑ der Kapazität C₀ ist, separiert. Als nächstes wird die Frequenz F der Rechteckerregerspannung U_{g} so geändert, dass sich die Phasenverschiebung CPP zwischen dem piezoelektrischen Strom Iₚ und der Rechteckerregerspannung U_{g} dem Wert Null nähert bzw. gleich Null wird. Der durch den Generator 6 für die akustische Stehwelle des Aktors 2 fließende piezoelektrische Strom Iₚ kann hierbei stabilisiert sein. Die erfindungsgemäße elektrische Erregervorrichtung 20 des Aktors 2 des Ultraschallmotors 1 funktioniert folgendermaßen: beim Anlegen der Versorgungsspannung E stellt der Leistungsverstärker 21 (25,26,27) eine elektrische Rechteckerregerspannung U_{g} bereit, deren Frequenz F sich geringfügig von der der mechanischen Resonanzfrequenz Fₘ des Aktors 2 unterscheidet. Diese Spannung wird an die Ausgänge 14, 15 der Elektroden 7,8 des Generators 6 gelegt. Die Spannung bewirkt, dass durch den Generator 6 und das Rückkopplungselement 22 (29, 30) der Strom I_{g} zu fließen beginnt. Am Rückkopplungselement 22 (29, 30) erscheint die Spannung U_{g}, die proportional dem Strom I_{g} ist. Durch das Impulsfilter 23 (33, 34, 35, 36) wird aus der Spannung U_{g} die Spannung Uₚ separiert, wobei sich up proportional zum piezoelektrischen Strom Iₚ und Uₑ sich proportional zum Lade- und Entladestrom Iₑ der Kapazität Co verhall. Die Spannung up stellt eine Sinusspannung dar, deren Phase in der mechanischen Resonanzfrequenz Fₘ mit der Phase der Rechteckerregerspannung U_{g} übereinstimmt (oder um 1800 gedreht ist). Die Frequenz-Phasencharakteristik der Spannung Uₚ stellt bezogen auf die Rechteckerregerspannung U_{g} - eine glatte und eindeutige Abhängigkeit dar. Vorausgesetzt, die elektrische Erregervorrichtung 20 ist als Autogenerator ausgeführt, fließt beim Einschalten der Versorgungsspannung E durch den Generator 6 ein Impulsstrom, so dass als Ergebnis in der elektrischen Erregervorrichtung 20 ein Schwingungsprozess mit der mechanischen Resonanzfrequenz Fₘ einsetzt. Da bei der mechanischen Resonanzfrequenz Fₘ der auf das Rückkopplungselement 22 bezogene Phasenverschiebungswinkel gleich Null ist und dieser Winkel nicht von der Last am Aktor abhängt, schwingt die elektrische Erregervorrichtung 20 bei einer beliebigen Last am Aktor 2 auf der mechanischen Resonanzfrequenz Fₘ.

Wenn die elektrische Erregervorrichtung 20 ein PLL-System zur Frequenzregelung mit negativer Rückkopplung darstellt, stabilisiert dieses System den Phasenverschiebungswinkel CPP zwischen der elektrischen Rechteckspannung ug und der Spannung Uₚ, d. h. dem piezoelektrischen Strom Iₚ so, dass sie gleich Null ist. Dabei stellt die elektrische Erregervorrichtung 20 die Spannung Uₚ bereit, deren Frequenz bei einer beliebigen Last am Aktor 2 immer gleich der mechanischen Resonanzfrequenz Fₘ ist.

Die zusätzliche Stabilisierung des piezoelektrischen Stromes Iₚ mit Hilfe des Stabilisierungssystems 57 ermöglicht es, die Schwingungsgeschwindigkeit Vp zusätzlich zu stabilisieren, und damit auch die Bewegungsgeschwindigkeit des anzutreibenden Elements 4.

Durch die Verwendung von Halbbrücken- oder Brückenverstärkern 26 bzw. von Zweitaktleistungsverstärkern 27 ist es möglich, den inneren Widerstand des Spannungsumschalters 25 maximal zu verringern und damit die Impulsdauer Tₑ des kapazitiven Stromes Iₑ maximal zu verkürzen.

Durch den Einsatz eines niederohmigen Widerstands 29 oder eines Messtransformator 30 als Rückkopplungselement 22 ist es möglich, den Phasenfehler bei der Wandlung des Stroms I_{g} in die Spannung U_{g} maximal zu reduzieren.

Die Ausführung des Impulsfilters 23 als Bandfilter 33 ermöglicht es, den Phasenfehler bei der mechanischen Resonanzfrequenz Fₘ zu eliminieren, während es die Auslegung des Impulsfilters 23 als Tiefpassfilter 34 oder als Integrator 35 möglich macht, diese Filter äußerst einfach aufzubauen.

Durch die Auslegung des Impulsfilters 23 als Impulseinrichtung 36 ist es möglich, den Phasenfehler im gesamten Arbeitsfrequenzbereich der Erregervorrichtung 20 zu eliminieren.

Durch Verwendung eines symmetrischen PWM-Modulators 53 oder eines Reglers für die elektrische Versorgungsspannung in der elektrischen Erregervorrichtung 20 ist es möglich, den Strom Iₚ (Vₚ) zu regeln, und damit die Bewegungsgeschwindigkeit des anzutreibenden Elements 4.

Die Ausführung der elektronischen Glieder als Digitalprozessor 59 macht es möglich, die elektrische Erregervorrichtung 20 und deren Aufbau zu vereinfachen, seine Kosten zu senken und seine Störunempfindlichkeit zu erhöhen.

Das erfindungsgemäße Verfahren und die erfindungsgemäße Vorrichtung ermöglichen es, die Frequenz der Erregerspannung für den Ultraschallaktor optimal zu halten. Diese Frequenz wird unabhängig von der auf den Aktor des Ultraschallmotors einwirkenden Lasten andauernd gleich der mechanischen Resonanzfrequenz des Aktors gehalten. Dies erhöht die Betriebsstabilität des Ultraschallmotors. Dadurch, dass der Ultraschallmotor stets in einem optimalen Betriebsregime arbeitet, verringert sich die Hohe der Erregerspannung, und der zum Betrieb erforderliche Strom bzw. die zum Betrieb erforderliche Leistung werden reduziert. Der Motor erhitzt sich weniger stark, was seinen Temperatureinsatzbereich erweitert.

## Patentansprüche

1. Verfahren zur elektrischen Erregung eines piezoelektrischen Aktors (2) eines Ultraschallmotors (1) mit einer mechanischen Resonanzfrequenz (Fₘ), wobei der Aktor (2) wenigstens einen akustischen Stehwellengenerator (6) mit einer Erregerelektrode (7) und einer allgemeinen Elektrode (8) aufweist, wobei sich zwischen der Erregerelektrode (7) und der allgemeinen Elektrode (8) eine elektrische Kapazität (C₀) ausbildet, **gekennzeichnet durch** folgende Schritte:
Anlegen einer rechteckigen Erregerspannung (U_{g}) an die Erregerelektrode (7) und die allgemeine Elektrode (8) des wenigstens einen akustischen Stehwellengenerators (6), wobei sich die Frequenz der rechteckigen Erregerspannung (U_{g}) von der mechanischen Resonanzfrequenz (Fₘ) des Aktors (2) unterscheidet,
Bereitstellung einer elektrischen Spannung (U_{g}) mit Hilfe eines Rückkopplungselements (22), wobei die bereitgestellte elektrische Spannung (U_{g}) proportional zu einem **durch** den Stehwellengenerator fließenden Strom (I_{g}) ist, der ein Summenstrom aus einem piezoelektrischen Strom (Iₚ) sowie einem Lade- und Entladestrom (Iₑ) der elektrischen Kapazität (C₀) ist,
Separierung einer elektrischen Spannung (uₚ) von einer elektrischen Spannung (u_{c}) mit Hilfe eines Impulsfilters (23), wobei die elektrische Spannung (uₚ) proportional zum piezoelektrischen Strom (Iₚ) und die elektrische Spannung (u_{c}) proportional zum Lade- und Entladestrom (Iₑ) der elektrischen Kapazität (C₀) ist,
Ändern der Frequenz der rechteckigen Erregerspannung (U_{g}) dergestalt, dass die Phasenverschiebung zwischen dem piezoelektrischen Strom (Iₚ) und der rechteckigen Erregerspannung (U_{g}) im Wesentlichen Null wird.

2. Verfahren nach Anspruch 1, **dadurch gekennzeichnet, dass** der durch den Stehwellengenerator (6) fließende piezoelektrische Strom (Iₚ) zusätzlich stabilisiert wird.

3. Vorrichtung zur elektrischen Erregung eines piezoelektrischen Aktors (2) eines Ultraschallmotors (1), wobei der Aktor (2) eine mechanische Resonanzfrequenz (Fₘ) hat und wenigstens einen akustischen Stehwellengenerator (6) mit einer Erregerelektrode (7) und einer allgemeinen Elektrode (8) zur Ausbildung einer elektrischen Kapazität (C₀) aufweist, die Vorrichtung aufweisend:
wenigstens einen Leistungsverstärker (21), der mit dem wenigstens einen akustischen Stehwellengenerator (6) direkt oder indirekt verbunden ist, der als Spannungsumschalter (25) für eine Versorgungsspannung des Aktors (2) ausgeführt ist und dem Stehwellengenerator (6) eine rechteckige Erregerspannung (U_{g}) bereitstellt,
ein Rückkopplungselement (22), welches mit dem akustischen Stehwellengenerator (6) in Reihe geschaltet ist, so dass durch das Rückkopplungselement (22) der gleiche Strom wie durch den Stehwellengenerator (6) fließt, und mit Hilfe des Rückkopplungselements (22) eine elektrische Spannung (U_{g}) bereitstellt ist, wobei die bereitgestellte elektrische Spannung (U_{g}) proportional zu einem durch den Stehwellengenerator (6) fließenden Strom (I_{g}) ist, der ein Summenstrom aus einem piezoelektrischen Strom (Iₚ) sowie einem Lade- und Entladestrom (Iₑ) der elektrischen Kapazität (C₀) ist,
ein Filter (23), das als Impulsfilter der durch das Rückkopplungselement (22) bereitgestellten elektrischen Spannung (U_{g}) ausgebildet ist, wobei das Impulsfilter derart ausgebildet ist, dass eine Separierung einer elektrischen Spannung (uₚ) von einer elektrischen Spannung (u_{c}) ermöglicht ist, wobei die elektrische Spannung (uₚ) proportional zum piezoelektrischen Strom (Iₚ) und die elektrische Spannung (u_{c}) proportional zum Lade- und Entladestrom (Iₑ) der elektrischen Kapazität (C₀) ist,
eine Steuerspannungs-Formierungseinrichtung (24), wobei ein Eingang der Steuerspannungs-Formierungseinrichtung (24) mit dem Ausgang des Impulsfilters (23) und ein Ausgang der Steuerspannungs-Formierungseinrichtung (24) mit einem Eingang des Leistungsverstärkers (21) verbunden ist, wobei die Steuerspannungs-Formierungseinrichtung (24) derart zum Ändern der Frequenz der rechteckigen Erregerspannung (U_{g}) ausgeführt ist, dass die Phasenverschiebung zwischen dem piezoelektrischen Strom (Iₚ) und der rechteckigen Erregerspannung (U_{g}) im Wesentlichen zu Null gebracht wird.

4. Vorrichtung nach Anspruch 3, **dadurch gekennzeichnet, dass** der Spannungsumschalter (25) als Halbbrückenleistungsverstärker (26) oder als Brückenleistungsverstärker (26) oder als Zweitaktleistungsverstärker (27) ausgeführt ist.

5. Vorrichtung nach Anspruch 4, **dadurch gekennzeichnet, dass** das Rückkopplungselement (22) als ein niedrigohmiger Wirkwiderstand oder ein Messtransformator für einen elektrischen Strom ausgeführt ist.

6. Vorrichtung nach einem der Ansprüche 3 bis 5, **dadurch gekennzeichnet, dass** das Impulsfilter (23) als ein auf die mechanische Resonanzfrequenz (Fₘ) des Aktors (2) abgestimmtes Bandfilter für die vom Rückkopplungselement (22) generierte Spannung (U_{g}) ausgeführt ist.

7. Vorrichtung nach einem der Ansprüche 3 bis 5, **dadurch gekennzeichnet, dass** das Impulsfilter (23) als Tiefpassfilter oder als Integrator für die durch das Rückkopplungselement (22) erzeugte Spannung ausgeführt ist.

8. Vorrichtung nach einem der Ansprüche 3 bis 5, **dadurch gekennzeichnet, dass** das Impulsfilter (23) einen Ausschalter für die vom Rückkopplungselement (22) erzeugte Spannung (U_{g}) aufweist, und ein Steuereingang des Impulsfilters (23) über einen Flankendetektor mit dem Spannungsumschalter (25) verbunden ist.

9. Vorrichtung nach einem der Ansprüche 3 bis 5, **dadurch gekennzeichnet, dass** das Impulsfilter (23) als Spannungskomparator ausgeführt ist.

10. Vorrichtung nach Anspruch 9, **dadurch gekennzeichnet, dass** diese als Autogenerator ausgeführt ist.

11. Vorrichtung nach einem der Ansprüche 3 bis 9, **dadurch gekennzeichnet, dass** die Steuerspannungs-Formierungseinrichtung (24) einen Phasendetektor und einen gesteuerten Generator für eine Rechteckspannung umfasst.

12. Vorrichtung nach einem der Ansprüche 8 bis 11, **dadurch gekennzeichnet, dass** die Steuerspannungs-Formierungseinrichtung (24) einen symmetrischen PWM-Modulator aufweist.

13. Vorrichtung nach einem der Ansprüche 8 bis 12, **dadurch gekennzeichnet, dass** diese einen Regler für die elektrische Spannung, die den Leistungsverstärker speist, aufweist.

14. Vorrichtung nach einem der Ansprüche 3 bis 13, **dadurch gekennzeichnet, dass** diese ein Stabilisierungssystem für den durch den Stehwellengenerator (6) fließenden piezoelektrischen Strom aufweist.

15. Vorrichtung nach einem der Ansprüche 3 bis 14, **dadurch gekennzeichnet, dass** deren elektronische Glieder teilweise oder vollständig durch einen programmierbaren Digitalprozessor des Typs DSP oder FPGA realisiert sind.

## Claims

1. Method for electrically exciting a piezoelectric actuator (2) of an ultrasonic motor (1) with a mechanical resonance frequency (Fₘ), wherein the actuator (2) comprises at least one acoustic standing wave generator (6), which comprises an exciter electrode (7) and a general electrode (8), wherein between the exciter electrode (7) and the general electrode (8) an electrical capacitance (C₀) is formed, the method being **characterized by** the following steps:
application of a rectangular excitation voltage (U_{g}) to the exciter electrode (7) and the general electrode (8) of the at least one acoustic standing wave generator (6), wherein the frequency of the rectangular excitation voltage (U_{g}) differs from the mechanical resonant frequency (Fₘ) of the actuator (2),
provision of an electrical voltage (U_{g}) by means of a feedback element (22), wherein the provided electrical voltage (U_{g}) is proportional to a current (I_{g}) flowing through the standing wave generator, which current (I_{g}) is a total current formed from the sum of a piezoelectric current (Iₚ) and a charging and discharging current (Iₑ) of the electrical capacitance (C₀),
separation of an electrical voltage (uₚ) from an electrical voltage (u_{c}) by means of an impulse filter (23), wherein the electrical voltage (uₚ) is proportional to the piezoelectric current (Iₚ), and the electrical voltage (u_{c}) is proportional to the charging and discharging current (Iₑ) of the electrical capacitance (C₀),
changing the frequency of the rectangular excitation voltage (U_{g}) such that the phase shift between the piezoelectric current (Iₚ) and the rectangular excitation voltage (U_{g}) is substantially zero.

2. Method according to claim 1, **characterized in that** the piezoelectric current (Iₚ) flowing through the standing wave generator (6) is additionally stabilized.

3. Device for electrically exciting a piezoelectric actuator (2) of an ultrasonic motor (1), wherein the actuator (2) has a mechanical resonance frequency (Fₘ) and comprises at least one acoustic standing wave generator (6), which comprises an exciter electrode (7) and a general electrode (8) for forming an electrical capacitance (C₀), the device comprising:
at least one power amplifier (21) which is directly or indirectly connected to the at least one acoustic standing wave generator (6) which is designed as a voltage selector switch (25) for a supply voltage of the actuator (2) and which provides a rectangular excitation voltage (U_{g}) to the standing wave generator (6),
a feedback element (22) which is connected in series with the acoustic standing wave generator (6), so that the same current which flows through the standing wave generator (6) also flows through the feedback element (22), and so that by means of the feedback element (22) an electrical voltage (U_{g}) is provided, wherein the provided electrical voltage (U_{g}) is proportional to a current (I_{g}) flowing through the standing wave generator (6), which current (I_{g}) is a total current formed from the sum of a piezoelectric current (Iₚ) and a charging and discharging current (Iₑ) of the electrical capacitance (C₀),
a filter (23) which is designed as an impulse filter of the electrical voltage (U_{g}) provided by the feedback element (u_{g}), wherein the impulse filter is designed such that a separation of an electrical voltage (uₚ) from an electrical voltage (u_{c}) is enabled, wherein the electrical voltage (uₚ) is proportional to the piezoelectric current (Iₚ), and the electrical voltage (u_{c}) is proportional to the charging and discharging current (Iₑ) of the electrical capacitance (C₀),
a control voltage shaping device (24), wherein an input of the control voltage shaping device (24) is connected to an output of the impulse filter (23) and an output of the control voltage shaping device (24) is connected to an input of the power amplifier (21), wherein the control voltage shaping device (24) is designed for changing the frequency of the rectangular excitation voltage (U_{g}) in such a manner that the phase shift between the piezoelectric current (Iₚ) and the rectangular excitation voltage (U_{g}) is brought substantially to zero.

4. Device according to claim 3, **characterized in that** the voltage selector switch (25) is realized as a half-bridge power amplifier (26) or as a bridge power amplifier (26) or as a dual-clock power amplifier (27).

5. Device according to claim 4, **characterized in that** the feedback element (22) is realized as a low-valued effective resistance or as a measurement transformer for an electrical current.

6. Device according to one the claims 3 to 5, **characterized in that** the impulse filter (23) is realized as a bandpass filter, tuned to the mechanical resonant frequency (Fₘ) of the actuator (u_{g}), for the voltage generated by the feedback element (22).

7. Device according to one of the claims 3 to 5, **characterized in that** the impulse filter (23) is realized as a low-pass filter or as an integrator for the voltage generated by the feedback element (22).

8. Device according to one of the claims 3 to 5, **characterized in that** the impulse filter (23) comprises a circuit breaker for the voltage (U_{g}) generated by the feedback element (22), and a control input of the impulse filter (23) is connected to the voltage selector switch (25) by means of a flank detector.

9. Device according to one of the claims 3 to 5, **characterized in that** the impulse filter (23) is realized as a voltage comparator.

10. Device according to claim 9, **characterized in that** said device is realized as an autogenerator.

11. Device according to any of the claims 3 to 9, **characterized in that** the control voltage shaping device (24) comprises a phase detector and a controlled generator for a rectangular wave.

12. Device according to one of the claims 8 to 11, **characterized in that** the control voltage shaping device (24) comprises a symmetrical PWM modulator.

13. Device according to one of the claims 8 to 12, **characterized in that** said device comprises a controller for the electrical voltage which feeds the power amplifier.

14. Device according to one of the claims 3 to 13, **characterized in that** said device comprises a stabilization system for the piezoelectric current flowing through the standing wave generator (6).

15. Device according to one of claims 3 to 14, **characterized in that** the electronic components thereof are partially or completely realized by a programmable digital processor of the type DSP or FPGA.

## Revendications

1. Procédé d'excitation électrique d'un actionneur piézoélectrique (2) d'un moteur ultrasonique (1) avec une fréquence de résonance mécanique (Fₘ), l'actionneur (2) comportant au moins un générateur d'ondes stationnaires acoustique (6) avec une électrode d'excitation (7) et une électrode générale (8), une capacité électrique (C₀) étant constituée entre l'électrode d'excitation (7) et l'électrode générale (8), **caractérisé par** les étapes suivantes :
application d'une tension d'excitation rectangulaire (U_{g}) à l'électrode d'excitation (7) et l'électrode générale (8) d'au moins un générateur d'ondes stationnaires acoustique (6), la fréquence de la tension d'excitation rectangulaire (U_{g}) se différenciant de la fréquence de résonance mécanique (Fₘ) de l'actionneur (2),
fourniture d'une tension électrique (U_{g}) à l'aide d'un élément de réaction (22), la tension électrique (U_{g}) mise à disposition étant proportionnelle à un courant (I_{g}) s'écoulant à travers le générateur d'ondes stationnaires, qui est un courant total d'un courant piézoélectrique (Iₚ) ainsi que d'un courant de charge et de décharge le de la capacité électrique (C₀),
séparation d'une tension électrique (uₚ) d'une tension électrique (u_{c}) à l'aide d'un filtre d'impulsions (23), la tension électrique (uₚ) étant proportionnelle au courant piézoélectrique (Iₚ) et la tension électrique (u_{c}) proportionnelle au courant de charge et de décharge (Iₑ) de la capacité électrique (C₀),
modification de la fréquence de la tension d'excitation rectangulaire (U_{g}) de telle sorte que le déphasage entre le courant piézoélectrique (Iₚ) et la tension d'excitation rectangulaire (U_{g}) est pour l'essentiel nul.

2. Procédé selon la revendication 1, **caractérisé en ce que** le courant piézoélectrique (Iₚ) s'écoulant à travers le générateur d'ondes stationnaires (6) est stabilisé de façon complémentaire.

3. Dispositif d'excitation électrique d'un actionneur piézoélectrique (2) d'un moteur ultrasonique (1), l'actionneur (2) ayant une fréquence de résonance mécanique (Fₘ) et comportant au moins un générateur d'ondes stationnaires acoustique (6) avec une électrode d'excitation (7) et une électrode générale (8) pour constituer une capacité électrique (C₀), le dispositif comportant :
au moins un amplificateur de puissance (21), qui est relié directement ou indirectement avec au moins un générateur d'ondes stationnaires acoustique (6), qui est exécuté comme commutateur de tension (25) pour une tension d'alimentation de l'actionneur (2) et fournit une tension d'excitation (U_{g}) au générateur d'ondes stationnaires (6),
un élément de réaction (22) qui est commuté en série au générateur d'ondes stationnaires acoustique (6) de sorte qu'à travers l'élément de reaction (22) s'écoule le même courant qu'à travers le générateur d'ondes stationnaires (6) et une tension électrique (U_{g}) est fournie à l'aide de l'élément de réaction (22), la tension électrique (U_{g}) mise à disposition étant proportionnelle à un courant (I_{g}) s'écoulant à travers le générateur d'ondes stationnaires (6), qui est un courant total d'un courant piézoélectrique (Iₚ) ainsi que d'un courant de charge et de décharge (Iₑ) de la capacité électrique (C₀),
un filtre (23) qui est constitué comme un filtre d'impulsions de la tension électrique (U_{g}) mise à disposition par l'élément de réaction, le filtre d'impulsions étant constitué de telle sorte qu'une séparation est possible entre une tension électrique (uₚ) et une tension électrique (u_{c}), la tension électrique (uₚ) étant proportionnelle au courant piézoélectrique (Iₚ) et la tension électrique (u_{c}) proportionnelle au courant de charge et de décharge (Iₑ) de la capacité électrique (C₀),
un dispositif de formation de tension de commande (24), une entrée du dispositif de formation de tension de commande (24) étant reliée à la sortie du filtre d'impulsions (23) et une sortie du dispositif de formation de tension de commande (24) à une entrée de l'amplificateur de puissance (21), le dispositif de formation de tension de commande (24) étant constitué pour la modification de la fréquence de la tension d'excitation (U_{g}) de telle manière que le déphasage entre le courant piézoélectrique (Iₚ) et la tension d'excitation rectangulaire (U_{g}) est porté pour l'essentiel à zéro.

4. Dispositif selon la revendication 3, **caractérisé en ce que** le commutateur de tension (25) est exécuté comme un amplificateur de puissance à demi-pont (26) ou comme un amplificateur de puissance à pont (26) ou comme amplificateur de puissance à deux temps (27).

5. Dispositif selon la revendication 4, **caractérisé en ce que** l'élément de réaction (22) est exécuté comme une résistance faiblement ohmique ou un transformateur de mesure pour un courant électrique.

6. Dispositif selon l'une quelconque des revendications 3 à 5, **caractérisé en ce que** le filtre d'impulsions (23) est exécuté comme un filtre de bande accordé sur la fréquence de résonance mécanique (Fₘ) de l'actionneur (2) pour la tension (U_{g}) générée par l'élément de réaction (22).

7. Dispositif selon l'une quelconque des revendications 3 à 5, **caractérisé en ce que** le filtre d'impulsions (23) est exécuté comme un filtre passe-bas ou comme un intégrateur pour la tension générée à travers l'élément de réaction (22).

8. Dispositif selon l'une quelconque des revendications 3 à 5, **caractérisé en ce que** le filtre d'impulsions (23) présente un coupe-circuit (22) pour la tension (U_{g}) générée par l'élément de réaction et une entrée de commande du filtre d'impulsions (23) est reliée au commutateur de tension (25) par le biais d'un détecteur de flanc.

9. Dispositif selon l'une quelconque des revendications 3 à 5, **caractérisé en ce que** le filtre d'impulsions (23) est exécuté comme un comparateur de tension.

10. Dispositif selon la revendication 9, **caractérisé en ce que** celui-ci est exécuté comme générateur automatique.

11. Dispositif selon l'une quelconque des revendications 3 à 9, **caractérisé en ce que** le dispositif de formation de tension de commande (24) comprend un détecteur de phase et un générateur piloté pour une tension rectangulaire.

12. Dispositif selon l'une quelconque des revendications 8 à 11, **caractérisé en ce que** le dispositif de formation de tension de commande (24) comporte un modulateur d'impulsions en largeur.

13. Dispositif selon l'une quelconque des revendications 8 à 12, **caractérisé en ce que** celui-ci comporte un régulateur pour la tension électrique qui alimente l'amplificateur de puissance.

14. Dispositif selon l'une quelconque des revendications 3 à 13, **caractérisé en ce qu'**il comporte un système de stabilisation pour le courant piézoélectrique s'écoulant à travers le générateur d'ondes stationnaires (6).

15. Dispositif l'une quelconque des revendications 3 à 14, **caractérisé en ce que** les éléments électroniques de celui-ci sont partiellement ou complètement réalisés par un processeur numérique programmable du type processeur de traitement numérique des signaux ou réseau logique prédiffusé programmable sur site.
